# EUROPÄISCHE PATENTANMELDUNG

(11) **EP 3 305 071 A1**
(43) Veröffentlichungstag der Anmeldung: **11.04.2018**
(21) Anmeldenummer: 17401105.6
(22) Anmeldetag: 05.10.2017
(51) Int. Cl.: A01M 7/00

(54) **STEUERSYSTEM, LANDWIRTSCHAFTLICHES NUTZFAHRZEUG UND VERFAHREN ZUR STEUERUNG EINES LANDWIRTSCHAFTLICHEN NUTZFAHRZEUGS**

(30) Priorität: 07.10.2016 DE 102016119054
(71) Anmelder: Amazonen-Werke H. Dreyer GmbH & Co. KG, 49205 Hasbergen (DE)
(72) Erfinder: große Prues, Frank, 49593 Bersenbrück (DE); Kowollik, Daniel, 47443 Moers (DE)

(57) **Zusammenfassung**

Die Erfindung betrifft ein Steuersystem, welches ein Verteilergestänge (2) für ein landwirtschaftliches Nutzfahrzeug (1) zum Ausbringen von Material, wie Düngemittel, Pflanzenschutzmittel oder Saatgut, wenigstens ein Mittel zur direkten oder indirekten Erfassung von verschiedenen Betriebszuständen und/oder Umwelteinflüssen und eine Datenverarbeitungseinheit (5) zur Verarbeitung der Signale des wenigstens einen Mittels und zur Generierung eines Stellsignals für ein Stellorgan umfasst. Das Verteilergestänge (2) weist hierzu mehrere zueinander in Transportstellung einklappbare und in Arbeitsstellung ausklappbare, durch Schwenkgelenke verbundene Gestängeabschnitte (6) und ein Ausweichgelenk (10) an jeweils einem Endabschnitt (11) des Verteilergestänges (2) auf. Weiterhin ist die Vorspannkraft des Ausweichgelenks (10) mittels des Stellorgans je nach Betriebszustand und/oder Umwelteinfluss veränderbar auf einen Minimalwert einstellbar ist, bei dem das Ausweichgelenk (10) in seiner Arbeitsstellung gehalten ist. Weiterhin betrifft die Erfindung ein landwirtschaftliches Nutzfahrzeug (1) und ein Verfahren zur Steuerung eines landwirtschaftlichen Nutzfahrzeuges (1).

## Beschreibung

Die Erfindung betrifft ein Steuersystem für ein landwirtschaftliches Nutzfahrzeug gemäß dem Oberbegriff des Patentanspruchs 1. Ferner betrifft die Erfindung ein landwirtschaftliches Nutzfahrzeug gemäß Anspruch 13, sowie ein Verfahren zur Steuerung eines landwirtschaftlichen Nutzfahrzeuges gemäß Anspruch 14.

Derartige Steuersysteme werden für landwirtschaftliche Nutzfahrzeuge zum Ausbringen von Material, wie Düngemittel, Pflanzenschutzmittel oder Saatgut verwendet. Um das Material großflächig und effizient auf dem zu bearbeitenden Feld auszubringen, weisen die landwirtschaftlichen Nutzfahrzeuge ein Verteilergestänge mit mehreren Sprühdüsen auf. Das Verteilergestänge erstreckt sich quer zur Fahrtrichtung und kann Arbeitsbreiten von bis zu 40m aufweisen. Die Sprühdüsen, welche in regelmäßigem Abstand am Verteilergestänge angebracht sind, dienen der Ausbringung des Materials auf das zu bearbeitende Feld. Dabei soll der Abstand zwischen dem Verteilergestänge und dem Boden oder der Oberkante des Pflanzenbestandes über die gesamte Arbeitsbreite des Verteilergestänges möglichst konstant bleiben. Das bedeutet, dass das Verteilergestänge möglichst parallel zum bearbeitenden Boden gehalten wird.

Bekanntermaßen weist das Verteilergestänge mehrere Gestängeabschnitte auf, welche klappbar ausgebildet sind, damit das Verteilergestänge von einer platzsparenden Transportstellung in eine Arbeitsstellung mit der vollen Arbeitsbreite überführt werden kann. Die Transportstellung beschreibt hierbei den eingeklappten Zustand des Verteilergestänges. Im Gegensatz dazu beschreibt die Arbeitsstellung jenen Zustand des Verteilergestänges, bei dem alle Gestängeabschnitte ausgeklappt sind. Mit anderen Worten weist das Verteilergestänge in der Arbeitsstellung die gesamte Arbeitsbreite auf und befindet sich in einer vollständigen horizontalen Ausgangslage parallel zum Boden. Das Verteilergestänge kann vorzugsweise an einem mittig gelegenen Rahmen befestigt sein und hierdurch mit dem landwirtschaftlichen Nutzfahrzeug verbunden sein. Es sind generell symmetrische oder asymmetrische Aufhängungen des Verteilergestänges am Rahmen möglich.

Im Rahmen der vorliegenden Anmeldung wird der Endabschnitt des Verteilergestänges als jener Abschnitt definiert, der bei voller Arbeitsbreite, oder anders gesagt bei einem vollständig ausgeklappten Verteilergestänge, sich außenseitig am Verteilergestänge befindet und mit dem innenseitig benachbarten Gestängeabschnitt über ein Ausweichgelenk, insbesondere ein Schwenkgelenk, verbunden ist. Mit anderen Worten beschreibt der Endabschnitt die nach außen hin freiliegende Spitze des Verteilergestänges. Es werden hierbei mit dem Ausweichgelenk und dem Endabschnitt und zugehörigen Stellorgan gleichermaßen jene Elemente des rechtsseitigen und linksseitigen äußeren Abschnitts des Verteilergestänges bezeichnet.

Ein beispielhaftes Steuersystem für ein landwirtschaftliches Nutzfahrzeug ist aus der EP 1 615 496 A1 bekannt. Das Nutzfahrzeug weist ein Verteilergestänge auf, welches mehrere zueinander in Transportstellung einklappbare und in Arbeitsstellung ausklappbare Gestängeabschnitte umfasst. Durch jeweils zwischen benachbarten Gestängeabschnitten des Verteilergestänges angeordnete doppeltwirkende Hydraulikzylinder wird das Verteilergestänges in der Arbeitsstellung gehalten.

Vorzugsweise am Rand des zu bearbeitenden Feldes kann es passieren, dass das Verteilergestänge auf ein Hindernis, wie beispielsweise einen Baum trifft. In diesem Fall muss der Endabschnitt des Verteilergestänges verschwenkt, beziehungsweise weggeklappt werden, damit er durch das Hindernis nicht beschädigt wird oder damit das landwirtschaftliche Nutzfahrzeug nicht durch ein Verlassen der Spur gezwungen ist, dem Hindernis direkt auszuweichen. Ein Verlassen der Spur würde eine unerwünschte Beschädigung des zu bearbeitenden Bodens oder des bereits gewachsenen Pflanzenbestandes zur Folge haben.

Der Endabschnitt des bekannten Verteilergestänges ist über ein bewegbares Ausweichgelenk am benachbart anliegenden Gestängeabschnitt befestigt und stellt einen Abbruchschutz dar. Dabei kann das Ausweichgelenk in Bezug auf die Fahrtrichtung in Vorwärts- und/oder Rückwärtsrichtung ausweichen.

Mittels eines mechanischen Sensors kann das Auftreffen des Verteilergestänges auf ein Hindernis erfasst werden. Durch den mechanischen Sensor kann zusätzlich ein elektrischer Schalter betätigt werden, wodurch hydraulische Ventile zum Druckausgleich im Hydraulikzylindern angesteuert werden. Mit anderen Worten werden mittels der hydraulischen Ventile die Hydraulikzylinder zum Einklappen oder Ausklappen des Endabschnitts angesteuert. Da das bekannte Verteilergestänge zum vollständigen Einklappen des Endabschnitts ausgebildet ist, entsteht eine Zeitverzögerung, bis der eingeklappte Abschnitt wieder durch ein erneutes vollständiges Ausklappen zum Besprühen benutzt werden kann.

Weiterhin kann durch das vollständige Einklappen bei einem andauernden Betrieb der Sprühdüsen während des Einklappvorgangs eine inhomogene Materialverteilung auf dem zu bearbeitenden Feld entstehen.

Der Erfindung liegt daher die Aufgabe zugrunde, eine variable Steuerung des Endabschnitts eines Verteilergestänges anzugeben. Der Erfindung liegt ferner die Aufgabe zu Grunde, ein landwirtschaftliches Nutzfahrzeug sowie ein Verfahren zur Steuerung eines landwirtschaftlichen Nutzfahrzeuges anzugeben.

Diese Aufgabe wird erfindungsgemäß durch ein Steuersystem mit den Merkmalen des Anspruchs 1 gelöst. Im Hinblick auf das landwirtschaftliche Nutzfahrzeug wird die Aufgabe durch den Gegenstand des Anspruchs 13 gelöst. Ferner wird die Aufgabe im Hinblick auf das Verfahren durch den Gegenstand des Anspruchs 14 gelöst.

Die Erfindung beruht auf dem Gedanken, ein Steuersystem anzugeben, welches ein Verteilergestänge für ein landwirtschaftliches Nutzfahrzeug zum Ausbringen von Material, wie Düngemittel, Pflanzenschutzmittel oder Saatgut, wenigstens ein Mittel zur direkten oder indirekten Erfassung von verschiedenen Betriebszuständen und/oder Umwelteinflüssen und eine Datenverarbeitungseinheit zur Verarbeitung der Signale des wenigstens einen Mittels und zur Generierung eines Stellsignals für ein Stellorgan umfasst. Das Verteilergestänge weist hierzu mehrere zueinander in Transportstellung einklappbare und in Arbeitsstellung ausklappbare, durch Schwenkgelenke verbundene Gestängeabschnitte und ein Ausweichgelenk an jeweils einem Endabschnitt des Verteilergestänges auf. Weiterhin ist die Vorspannkraft des Ausweichgelenks mittels des Stellorgans je nach Betriebszustand und/oder Umwelteinfluss veränderbar auf einen Minimalwert einstellbar, bei dem das Ausweichgelenk in seiner Arbeitsstellung gehalten ist.

Generell ist hierbei vorgesehen, dass das Ausweichgelenk und damit auch der Endabschnitt des Verteilergestänges bei Bedarf in eine auf die Fahrtrichtung bezogene Vorwärts- und/oder Rückwärtsrichtung oder auch in vertikaler Richtung ausweichen und/oder verschwenkt werden kann. Die Verstellung erfolgt hierbei über das Stellorgan, welches vorzugsweise als Aktor ausgebildet ist, der die Einstellung einer straffen oder lockeren Stellung des Ausweichgelenks ermöglicht. Hierzu wird über den Aktor das Stellsignal der Datenverarbeitungseinheit in mechanische Bewegung umgewandelt.

Die Erfindung hat den Vorteil, dass die notwendige Vorspannkraft des Ausweichgelenks möglichst gering gehalten werden kann, und gleichzeitig im ungestörten Betrieb des landwirtschaftlichen Nutzfahrzeuges das Ausweichgelenk und damit der Endabschnitt möglichst starr mit dem Verteilergestänge verbunden sein kann. Die Vorspannkraft beschreibt hierbei die Haltekraft des Ausweichgelenks. Anders gesagt bezeichnet die Vorspannkraft jene Kraft, welche das Ausweichgelenk und damit auch den Endabschnitt mit dem restlichen Teil des Verteilergestänges verbindet und in der Arbeitsstellung hält. Erfindungsgemäß sollen die Kräfte auf das Ausweichgelenk und generell auf das Verteilergestänge möglichst gering gehalten werden, sodass Beschädigungen effizient verhindert werden können. Ebenso können Situationen, in denen das Ausweichgelenk zu starr oder zu lose mit dem Verteilergestänge verbunden ist, vermieden werden, sodass der Endabschnitt des Verteilergestänges optimal gehalten wird.

Im Vergleich zum bekannten Verteilergestänge gemäß dem Stand der Technik kann eine Situation vermieden werden, bei der die Vorspannkraft im Betrieb des landwirtschaftlichen Nutzfahrzeuges auf dem zu bearbeitenden Feld einen Wert von Null annimmt, so dass der Endabschnitt komplett eingeklappt wird und nicht mehr in der Transportstellung gehalten wird. Erfindungsgemäß ist vorgesehen, dass das Ausweichgelenk mittels des Stellorgans aktiv und kontinuierlich in der Arbeitsstellung gehalten und die notwendige Minimalkraft zum Vorspannen variiert und dauerhaft aufrechterhalten wird.

Die Erfindung hat weiterhin den Vorteil, dass durch die Einstellung eines Minimalwertes der Vorspannkraft, dass Ausweichgelenk permanent in seiner Arbeitsstellung gehalten werden kann, beziehungsweise im Falle einer Auslenkung durch ein Hindernis schnellstmöglich in die Arbeitsstellung zurückgeführt werden kann. Hierdurch können die vorhandenen Sprühdüsen am Endabschnitt zur Ausbringung des Materials dauerhaft in Betrieb sein. Da der Endabschnitt beispielsweise bei einer Kollision nicht komplett eingeklappt wird, sondern durch die Vorspannkraft schnellstmöglich in die Arbeitsstellung zurückgebracht wird, sind mögliche Fehlapplikationen des auszubringenden Materials aus dem Sprühdüsen gering.

Die Erfindung hat weiterhin den Vorteil, dass durch die vorhandenen Mittel zur direkten oder indirekten Erfassung von verschiedenen Betriebszuständen und/oder Umwelteinflüssen die Vorspannkraft des Ausweichgelenks sehr flexibel und variabel angepasst, beziehungsweise eingestellt werden kann. Dadurch kann bei jeglichen auftretenden Störgrößen die Vorspannkraft des Ausweichgelenks verstellt werden, damit das Ausweichgelenk und damit der Endabschnitt des Verteilergestänges in der Arbeitsstellung gehalten werden. Demnach können neben dem schwerwiegenden Fall einer Kollision mit einem Hindernis, auch vergleichbar weniger gravierende Vorfälle, wie beschleunigte oder verzögerte Bewegungen aufgrund von Bodenunebenheiten, kompensiert werden, wobei es nichtsdestotrotz für die effiziente Ausbringung des Materials vorteilhaft ist, das Verteilergestänge schnellstmöglich in seine Arbeitsstellung zurückzuführen.

Bevorzugte Ausführungsformen der Erfindung sind in den Unteransprüchen angegeben.

Bei einer bevorzugten Ausführungsform der Erfindung ist das wenigstens eine Mittel derart ausgebildet, dass sowohl Hindernisse, insbesondere die Position von Hindernissen, als auch die Bewegung des Verteilergestänges, insbesondere auftretende Beschleunigungen, erfassbar sind. Hierzu kann das Mittel vorzugsweise als Sensor, insbesondere als Bewegungssensor, ausgebildet sein. Es sind generell verschiedene Arten von Sensoren zur Erfassung eines Hindernisses oder zur Überwachung der Bewegungsart des Verteilergestänges denkbar. Im Speziellen kann der Sensor zur Geschwindigkeitsüberwachung ausgebildet sein, das heißt es wird ermittelt, ob das Verteilergestänge mit einer kontinuierlichen Geschwindigkeit bewegt wird, oder ob eine Beschleunigung oder Verzögerung vorliegt. Grundsätzliche Gesichtspunkte für die Sensorauswahl betreffen zweckmäßigerweise die dynamische Messgenauigkeit, eine geringe Trägheit des Sensors, und vorzugsweise eine hohe Messstabilität hinsichtlich Umweltbedingungen, wie beispielsweise Temperatur oder Feuchtigkeit.

Vorteilhafterweise ist die Vorspannkraft des jeweiligen Ausweichgelenks in Abhängigkeit von auftretenden Beschleunigungen des Verteilergestänges und/oder des landwirtschaftlichen Nutzfahrzeuges und/oder Erschütterungen aufgrund von Bodenunebenheiten und/oder Kurvenfahrten des landwirtschaftlichen Nutzfahrzeuges einstellbar. Weitere Möglichkeiten sind auftretenden Schwingungen oder Gierbewegungen des Verteilergestänges und/oder auftretenden Relativbewegungen des Ausweichgelenks zum starren Teil des Verteilergestänges und/oder einer Kollision mit einem Hindernis. Auch ist es denkbar die Vorspannkraft des Ausweichgelenks in Abhängigkeit von der aktuellen Fahrgeschwindigkeit und/oder der Aktivierung der Sprühdüsen veränderbar auf einen unterschiedlichen Minimalwert einzustellen. Damit kann eine große Vielfalt an möglichen Störfällen im Betrieb des Verteilergestänges auf dem zu bearbeitenden Feld umfasst werden, sodass das Ausweichgelenk nahezu zu jeder Zeit in seiner Arbeitsstellung gehalten werden kann und im Bedarfsfall schnellstmöglich und effizient zurückgeführt werden kann. Die Erfindung ist hierbei nicht auf die genannten unerwünschten Störfälle begrenzt, sondern auf jeglichen Betriebszustand und/oder Umwelteinfluss erweiterbar, in denen es von Vorteil ist, die Vorspannkraft des Ausweichgelenks anzupassen und auf einen anderen Minimalwert einzustellen. Anders gesagt sind auch weitere Störfälle denkbar, in denen es vorteilhaft ist, die Vorspannkraft des Ausweichgelenks zu lockern oder stärker einzustellen.

Vorzugsweise ist das wenigstens eine Mittel durch einen Drehratensensor oder einen Beschleunigungssensor oder einen Dehnungsmesstreifen zur Ermittlung einer Belastungsänderung des Ausweichgelenks gebildet. Beispielsweise kann über den Sensor erfasst werden, ob sich der Endabschnitt des Verteilergestänges über das Ausweichgelenk bewegt. Hierbei wäre auch eine Erfassung der Bewegungsstärke oder der Amplituden denkbar. Werden kontinuierliche Bewegungen im Ausweichgelenk von dem Sensor registriert, erhöht das Steuersystem so lange die Vorspannkraft des Ausweichgelenks bis keine Bewegungen bei einer normalen Feldfahrt mehr detektiert werden oder ein festgelegter Maximalwert erreicht wurde. Werden keine Bewegungen im Ausweichgelenk registriert, kann die Vorspannkraft so lange reduziert werden, bis vereinzelte geringe Bewegungen am Außenausleger bei einer normalen Fahrt registriert werden.

Weiterhin kann durch eine Ermittlung der Drehrate des Nutzfahrzeuges um die vertikale Achse und/oder der Geschwindigkeitsänderung erfasst werden, ob sich das landwirtschaftliche Nutzfahrzeug in einer Kurvenfahrt befindet. Das Mittel kann hierbei vorteilhafterweise am Verteilergestänge und/oder am landwirtschaftlichen Nutzfahrzeug positioniert sein. In Abhängigkeit von auftretenden Beschleunigungen und dem zugehörigen Betriebszustand des landwirtschaftlichen Nutzfahrzeuges kann die Vorspannkraft des Ausweichgelenks über die Datenverarbeitungseinheit und das zugehörige Stellorgan variiert werden, sodass das Ausweichgelenk weicher oder härter vorgespannt werden kann. Darüber hinaus ist es mittels Beschleunigungssensoren am Verteilergestänge möglich, Schwingungen des Endabschnitts zu erfassen. Diese Schwingungen können beispielsweise von Unebenheiten auf dem zu bearbeitenden Feld oder Spurrillen resultieren. Durch auftretende Schwingungen des Verteilergestänges und des Endabschnitts kann keine homogene Materialausbringung garantiert werden. Deshalb ist es besonders von Vorteil, im Falle einer zu starken Relativbewegung des Ausweichgelenks und des Endabschnitts im Vergleich zum restlichen Verteilergestänge, den Minimalwert der Vorspannkraft des Ausweichgelenks anzupassen, insbesondere zu erhöhen, damit das Ausweichgelenk gleichbleibend in der Arbeitsstellung gehalten wird.

Weiter vorzugsweise ist das wenigstens eine Mittel durch einen GPS-Sensor oder einen akustischen oder optischen Sensor zur Ermittlung der Position von Hindernissen gebildet. Dies hat den Vorteil, dass Hindernisse, wie beispielsweise Bäume in der Nähe oder am Rand des zu bearbeitenden Feldes, frühzeitig erkannt werden können und damit vorrausschauend die Vorspannkraft des Ausweichgelenks angepasst werden kann. Im Falle einer unvermeidbaren Kollision mit einem Hindernis kann die Vorspannkraft frühzeitig derart reduziert werden, so dass das Ausweichgelenk mit einer minimalen Vorspannkraft gehalten wird, um schnellstmöglich nach der Kollision wieder in die Arbeitsstellung zurückgeführt werden zu können. Demnach kann anhand von GPS (Global Positioning System)-Daten des Sensors ermittelt werden, ob das Ausweichgelenk stärker vorgespannt werden muss, also die minimale Vorspannkraft erhöht werden sollte. Beispielsweise bei einer ersten Umrundung des zu bearbeitenden Feldes mit dem landwirtschaftlichen Nutzfahrzeug ist die Gefahr am größten, dass der Endabschnitt des Verteilergestänges an der Feldkante mit einem Objekt bzw. Hindernis kollidiert. Aus diesem Grund sollte die minimale Vorspannkraft des Ausweichgelenks bei der ersten Feldumrundung geringer gewählt werden, um Beschädigungen an dem Verteilergestänge zu verhindern. Des Weiteren können aufgrund der GPS-Daten vorteilhafterweise die Positionskoordinaten von möglich auftretenden Hindernissen in der Datenverarbeitungseinheit hinterlegt und gespeichert werden, wodurch die Früherkennung von Hindernissen weiter effizient verbessert werden kann.

In einer weiteren Ausführungsform ist das wenigstens eine Mittel derart ausgebildet, dass Prozessinformationen des Fahrzeugzustands, insbesondere der Betriebszustand der Sprühdüsen des Verteilergestänges, erfassbar sind. Hierbei kann das Mittel sehr einfach ausgestaltet sein, indem eine Steuereinheit in der Datenverarbeitungseinheit ermittelt, ob die Sprühdüsen, insbesondere die in dem oder den äußeren Segmenten des Verteilergestänges, aktiviert oder deaktiviert sind. Es ist in diesem Fall kein Sensor notwendig. Bei deaktivierten Sprühdüsen im Betrieb des landwirtschaftlichen Nutzfahrzeuges auf dem zu bearbeitenden Feld ist das Verhalten des Ausweichgelenks als weniger relevant im Vergleich zum Betrieb der Sprühdüsen anzusehen. Es ist bei deaktivierten Sprühdüsen davon auszugehen, dass das Ausweichgelenk auch aufgrund von minimalen Umwelteinflüssen oder Hinderniseinflüssen wegklappen kann. Demnach ist es vorteilhaft, die Vorspannkraft des Ausweichgelenks abhängig vom Betriebszustand der Sprühdüsen einzustellen. Hinsichtlich von weiteren Prozessinformationen des Fahrzeugzustandes ist es von Vorteil, die Vorspannung des Ausweichgelenks in Abhängigkeit von der Fahrtgeschwindigkeit des landwirtschaftlichen Nutzfahrzeuges veränderbar einzustellen. Im Falle eines frühzeitig erkannten Hindernisses wird in der Regel die Fahrtgeschwindigkeit vom Anwender reduziert, um sich dem Hindernis zur Vorbeugung von Schäden möglichst langsam zu nähern. Hierzu kann es von Vorteil sein, die Vorspannkraft des Ausweichgelenks ebenso auf einen veränderlichen Minimalwert zu reduzieren.

In einer bevorzugten Ausführungsform sind mehrere Mittel an verschiedenen Positionen am Verteilergestänge, insbesondere im angrenzenden Bereich an das jeweilige Ausweichgelenk, und/oder am landwirtschaftlichen Nutzfahrzeug positioniert. Die Mittel können generell unterschiedlich oder gleichartig ausgebildet sein. Weiterhin können die mehreren Mittel an unterschiedlichen Positionen am Verteilergestänge und/oder am landwirtschaftlichen Nutzfahrzeug positioniert sein. Es kann von besonderem Vorteil sein, dass die gleiche Anzahl an Mittel am rechtsseitigen und linksseitigen Abschnitt des Verteilergestänges positioniert ist. Die Anbringung von mehreren Mitteln hat generell den Vorteil, dass die Datenverarbeitungseinheit beispielsweise die Signale aller Mittel kombinieren kann, um bei Fehlmessungen oder dem Ausfall eines einzelnen Mittels, die Vorspannkraft des Ausweichgelenks möglichst genau einzustellen.

Weiterhin kann anhand von plötzlich auftretenden Gierbewegungen des Verteilergestänges auf die Kollision mit einem Hindernis geschlossen werden. Hierzu ist es von besonderem Vorteil, wenn sowohl ein Mittel zur Erfassung der Drehbewegung am Verteilergestänge, als auch ein Mittel zur Erfassung von Gierbewegungen am landwirtschaftlichen Nutzfahrzeug positioniert ist. Dadurch kann ausgeschlossen werden, dass die ermittelten Gierbewegungen am Verteilergestänge nicht auf die Bewegungen des Nutzfahrzeuges zurückzuführen sind. Durch den Einsatz von mehreren Sensoren kann somit die Vorspannkraft des Ausweichgelenks optimal eingestellt werden.

Vorteilhafterweise weist das Stellorgan ein Hydrauliksystem zur Veränderung der Vorspannkraft des Ausweichgelenks auf. Derartige Systeme bilden kostengünstige und einfache Mittel zur Einstellung der Vorspannkraft. Des Weiteren ermöglichen hydraulische Systeme eine sehr präzise und vor allem schnelle Stellgenauigkeit, wobei bei Bedarf auch sehr große Kräfte erzeugt werden können, um das Ausweichgelenk möglichst starr mit dem Verteilergestänge zu verbinden.

In einer besonders bevorzugten Ausführungsform umfasst das Hydrauliksystem einen Hydraulikzylinder, insbesondere einen einfachwirkenden Hydraulikzylinder, eine Hydraulikleitung, welche zur Zufuhr von Hydraulikflüssigkeit an den Hydraulikzylinder angeschlossen ist, und eine hydraulische Ventileinheit, insbesondere ein Druckregelventil, zur Regelung des Hydraulikdrucks, wobei die Ventileinheit über ein Stellsignal der Datenverarbeitungseinheit steuerbar ist. Die hydraulische Ventileinheit kann beispielhaft durch ein Druckregelventil, ein Druckbegrenzungsventil oder weitere Verschaltungen zur Verstellung bzw. Änderung des anliegenden Hydraulikdrucks umfassen. Insbesondere das Druckbegrenzungsventil hat den Vorteil eines sicheren und schnell wirkenden Überlastungsschutz des Hydraulikzylinders. Generell hat der Einsatz einer Hydraulikflüssigkeit den Vorteil, dass die Reibung im Stellorgan vermindert ist und gleichzeitig Korrosionsschutz gewährleistet werden kann. Das Stellorgan kann zweckmäßigerweise generell als Aktor ausgebildet sein, um die elektrischen Stellsignale der Datenverarbeitungseinheit in eine mechanische Bewegung umzuwandeln, welche die Vorspannkraft des Ausweichgelenks derart verändert, dass dieses in seiner Arbeitsstellung gehalten wird oder bei Bedarf schnellstmöglich in die Arbeitsstellung zurückgeführt wird.

Weiter vorzugsweise steht die an dem jeweiligen Hydraulikzylinder angeschlossene Hydraulikleitung mit zumindest einem Hydraulikspeicher in Verbindung. Es ist denkbar, dass das Hydrauliksystem einen zentralen Hydraulikspeicher umfasst oder alternativ jeweils ein Hydraulikspeicher dem rechtsseitigen oder linksseitigen Ausweichgelenk des Verteilergestänges zugeordnet ist. Durch den Hydraulikspeieher wird vorteilhafterweise der in dem Hydraulikzylinder wirkende Hydraulikdruck zur Einstellung der Vorspannkraft des Ausweichgelenks erzeugt.

Vorteilhafterweise ist hierbei das wenigstens eine Mittel durch einen Drucksensor, insbesondere einen Druckmessumformer, gebildet, welcher in der Hydraulikleitung angebracht ist. Beispielsweise kann anhand einer plötzlich auftretenden Druckspitze im Hydraulikzylinder auf die Kollision mit einem Hindernis geschlossen werden. Daraufhin kann die Vorspannkraft des Ausweichgelenks vorteilhafterweise unmittelbar reduziert und damit angepasst werden. Ebenso können auch Erschütterungen anhand von möglichen Druckschwankungen durch das Überfahren von Bodenunebenheiten mittels des Drucksensors erfasst und die Vorspannkraft dementsprechend angepasst werden.

In einer weiteren Ausführungsform weist die Datenverarbeitungseinheit eine Betätigungsvorrichtung zur manuellen Generierung eines Stellsignals für das Stellorgan auf. Mit anderen Worten ist die Vorspannkraft mittels des Stellorgans basierend auf den Signalen des wenigstens einen Mittels manuell verstellbar. Es kann hierzu von besonderem Vorteil sein, wenn die Betätigungsvorrichtung als Knopf an der Datenverarbeitungseinheit ausgebildet ist. Dies ermöglicht dem Anwender des landwirtschaftlichen Nutzfahrzeuges die Vorspannkraft des Ausweichgelenks während des Fahrzeugbetriebs manuell und/oder automatisch nach Bedarf zu verstellen.

Im Rahmen der vorliegenden Anmeldung wird weiterhin ein landwirtschaftliches Nutzfahrzeug zum Ausbringen von Material, wie Düngemittel, Pflanzenschutzmittel oder Saatgut mit einem Steuersystem nach einem der vorhergehenden Ausführungsformen beansprucht.

Weiterhin wird im Rahmen der vorliegenden Anmeldung ein Verfahren zur Steuerung eines landwirtschaftlichen Nutzfahrzeuges offenbart, wobei das landwirtschaftliche Nutzfahrzeug ein Verteilergestänge zum Ausbringen von Material, wie Düngemittel, Pflanzenschutzmittel oder Saatgut, wenigstens ein Mittel zur direkten oder indirekten Erfassung von verschiedenen Betriebszuständen und/oder Umwelteinflüssen und eine Datenverarbeitungseinheit zur Verarbeitung der Signale des wenigstens einen Mittels und zur Generierung eines Stellsignals für ein Stellorgan umfasst. Das Verteilergestänge weist mehrere zueinander in Transportstellung einklappbare und in Arbeitsstellung ausklappbare, durch Schwenkgelenke verbundene Gestängeabschnitte, und an jeweils einem Endabschnitt des Verteilergestänges ein Ausweichgelenk auf. Das Verfahren umfasst folgende Schritte:
a) das wenigstens eine Mittel erfasst den Betriebszustand und/oder Umwelteinfluss des Verteilergestänges und/oder landwirtschaftlichen Nutzfahrzeuges;
b) die Signale des wenigstens einen Mittels werden von der Datenverarbeitungseinheit verarbeitet;
c) die Datenverarbeitungseinheit generiert ein Stellsignal basierend auf den Signalen des Mittels;
d) mit Hilfe des Stellsignals wird das dem jeweiligen Ausweichgelenk zugeordnete Stellorgan angesteuert, sodass die Vorspannkraft des jeweiligen Ausweichgelenks auf einen Minimalwert eingestellt wird, bei dem das Ausweichgelenk in seiner Arbeitsstellung gehalten wird.

In einer weiteren Ausführungsform wird die Vorspannkraft des Ausweichgelenks in Abhängigkeit von auftretenden Beschleunigungen des Verteilergestänges und/oder des landwirtschaftlichen Nutzfahrzeuges und/oder Erschütterungen aufgrund von Bodenunebenheiten und/oder Kurvenfahrten des landwirtschaftlichen Nutzfahrzeuges und/oder auftretenden Schwingungen oder Gierbewegungen des Verteilergestänges und/oder auftretenden Relativbewegungen des Ausweichgelenks zum starren Teil des Verteilergestänges und/oder einer Kollision mit einem Hindernis und/oder der aktuellen Fahrgeschwindigkeit und/oder der Aktivierung der Sprühdüsen auf einen unterschiedlichen Minimalwert eingestellt.

Weiter vorzugsweise wird die Vorspannkraft des Ausweichgelenks des Verteilergestänges im Bedarfsfall manuell mittels einer Betätigungsvorrichtung der Datenverarbeitungseinheit mittels des Stellorgans verändert.

Zu den Vorteilen des Verfahrens zur Steuerung eines landwirtschaftlichen Nutzfahrzeuges wird auf die im Zusammenhang mit dem Steuersystem erläuterten Vorteile verwiesen.

Die Erfindung wird nachstehend mit weiteren Einzelheiten unter Bezug auf die beigefügten schematischen Zeichnungen näher erläutert. Darin zeigen
- Fig. 1: eine Seitenansicht eines landwirtschaftlichen Nutzfahrzeuges mit einem Verteilergestänge und einem Steuersystem nach einem erfindungsgemäßen Ausführungsbeispiel;
- Fig. 2: eine Rückansicht des landwirtschaftlichen Nutzfahrzeuges gemäß Fig. 1 mit einem Steuersystem nach einem erfindungsgemäßen Ausführungsbeispiel bei deaktivierten Sprühdüsen;
- Fig. 3: eine Rückansicht des landwirtschaftlichen Nutzfahrzeuges gemäß Fig. 2 bei aktivierten Sprühdüsen;
- Fig. 4: eine Frontalansicht des rechtsseitigen Ausweichgelenks zwischen dem Endabschnitt und dem benachbarten innen angrenzenden Gestängeabschnitt nach einem weiteren erfindungsgemäßen Ausführungsbeispiel;
- Fig. 5: eine perspektivische Ansicht des Ausweichgelenks gemäß Fig. 4;
- Fig. 6: eine Frontalansicht des Ausweichgelenks gemäß Fig. 4, wobei der Endabschnitt des Verteilergestänges sich in einer nach oben gerichteten Ausweichposition befindet;
- Fig. 7: eine perspektivische Ansicht des Ausweichgelenks gemäß Fig. 6;
- Fig. 8: eine schematische Prinzipdarstellung eines Hydraulikschaltplans für ein erfindungsgemäßes Steuersystem zur Einstellung der Vorspannkraft des Ausweichgelenks auf einen Minimalwert;
- Fig. 9: eine weitere schematische Prinzipdarstellung eines Hydraulikschaltplans für ein erfindungsgemäßes Steuersystem;
- Fig. 10: eine dritte schematische Prinzipdarstellung eines Hydraulikschaltplans für ein erfindungsgemäßes Steuersystem.

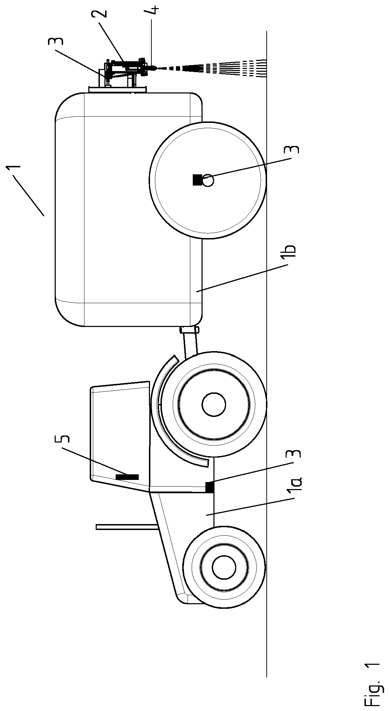

Fig. 1 zeigt eine Seitenansicht eines landwirtschaftlichen Nutzfahrzeuges 1 mit einem Steuersystem nach einem erfindungsgemäßen Ausführungsbeispiel. Dabei weist das Steuersystem ein Verteilergestänge 2 zum Ausbringen von Material, wie Düngemittel, Pflanzenschutzmittel oder Saatgut und drei Sensoren 3 zur direkten Erfassung von verschiedenen Betriebszuständen und/oder Umwelteinflüssen auf. Das landwirtschaftliche Nutzfahrzeug 1 umfasst ein Antriebsfahrzeug 1a und einen daran gekoppelten Anhänger 1b, wobei das Verteilergestänge 2 an einer Rückseite des Anhängers 1b an einen Rahmen gekoppelt ist. Im Antriebsfahrzeug 1a ist eine Datenverarbeitungseinheit 5 angeordnet, welche bei Bedarf auch manuell vom Anwender bedient sein kann. Die Datenverarbeitungseinheit 5 ist zur Verarbeitung der Signale der Sensoren 3 und zur Generierung eines Stellsignals für ein nicht dargestelltes Stellorgan am Verteilergestänge 2 ausgebildet. Das Verteilergestänge 2 ist hier in der Arbeitsstellung dargestellt.

Über ein dem nicht dargestellten Ausweichgelenk 10 am Verteilergestänge 2 zugeordnetes Stellorgan kann die Vorspannkraft des Ausweichgelenks 10 je nach Betriebszustand und/oder Umwelteinfluss veränderbar auf einen Minimalwert eingestellt werden. Dadurch kann das Ausweichgelenk 10 und damit der Endabschnitt 11 des Verteilergestänges 2 möglichst starr und gleichzeitig mit geringstem Kraftaufwand in der Arbeitsstellung gehalten werden. Vorzugsweise in der Arbeitsstellung, oder anders gesagt bei einem vollständig ausgeklappten Verteilergestänge 2, sind die an einer Unterkante des Verteilergestänges 2 angebrachten Sprühdüsen 4 aktiviert, um das auszubringende Material auf das zu bearbeitende Feld zu sprühen.

Die drei Sensoren 3 sind beispielhaft an einer Unterkante des Antriebsfahrzeuges 1a, an einem Rad des Anhängers 1b und am Verteilergestänge 2 positioniert. Die Sensoren 3 können als Drehraten- und/oder Beschleunigungssensoren ausgebildet sein. Es können beispielhaft auftretende Beschleunigungen anhand von einer Kurvenfahrt oder Bodenunebenheiten erfasst werden. Durch die Positionierung der Sensoren 3 am Verteilergestänge 2 und am Nutzfahrzeug 1 können die Bewegungen des Verteilergestänges 2 von jenen Bewegungen des Fahrzeugs 1 entkoppelt werden. Demnach kann, basierend auf den Messsignalen der Sensoren 3, die Datenverarbeitungseinheit 5 präzise und effizient ein Stellsignal für das zugehörige Stellorgan des Ausweichgelenks 10 generieren, um das jeweilige Ausweichgelenk 10 stärker oder lockerer vorzuspannen. Anders gesagt wird hierbei der Minimalwert der Vorspannkraft des jeweiligen Ausweichgelenks 10 angepasst und je nach Störfeinfluss veränderlich auf einen Minimalwert eingestellt.

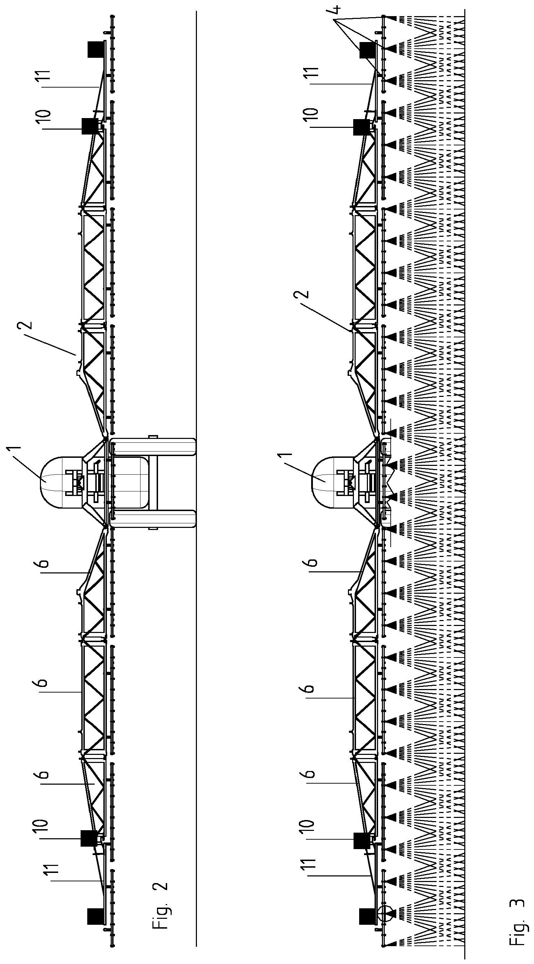

Die Figuren 2 und 3 zeigen jeweils eine Rückansicht des landwirtschaftlichen Nutzfahrzeuges 1 gemäß Fig. 1 bei deaktivierten und aktivierten Sprühdüsen 4. Das Verteilergestänge 2 ist in der Arbeitsstellung mit vollständig ausgeklappten Gestängeabschnitten 6 und damit mit voller Arbeitsbreite gezeigt. Das Verteilergestänge 2 weist sowohl rechtsseitig als auch linksseitig drei Gestängeabschnitte 6 auf. Demnach ist das Verteilergestänge 2 symmetrisch ausgebildet. Die Gestängeabschnitte 6 sind beispielhaft durch Schwenkgelenke miteinander verbunden, sodass das Verteilergestänge 2 in eine Transportstellung und Arbeitsstellung geklappt werden kann.

Jeweils am rechtsseitigen und linksseitigen Ende des Verteilergestänges 2 ist ein Endabschnitt 11 angebracht. Der Endabschnitt 11 ist über ein Ausweichgelenk 10 mit dem benachbarten innenliegenden Gestängeabschnitt 6 verbunden. Der Endabschnitt 11 weist wie die anderen Gestängeabschnitte 6 Sprühdüsen 4 auf.

Durch die Einstellung eines Minimalwertes der Vorspannkraft, kann das Ausweichgelenk 10 und damit der Endabschnitt 11 permanent in seiner Arbeitsstellung gehalten werden, beziehungsweise im Falle einer Auslenkung durch eine Kollision mit einem Hindernis schnellstmöglich in die Arbeitsstellung zurückgebracht werden. Vorteilhafterweise können demnach die Sprühdüsen 4 des Endabschnitts 11 zur Ausbringung des Materials dauerhaft in Betrieb sein.

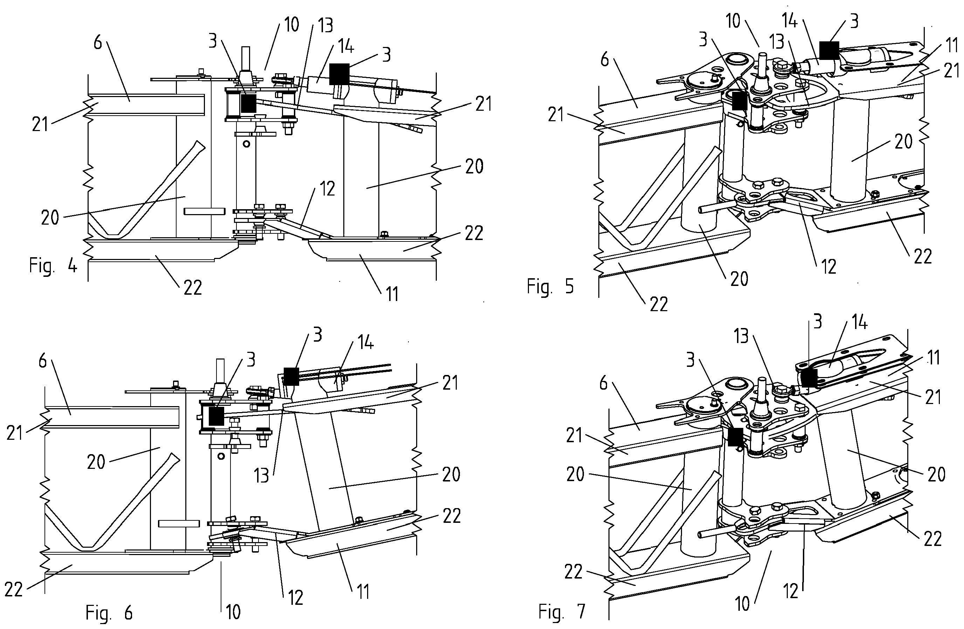

Die Figuren 4 und 5 zeigen eine Frontalansicht und eine perspektivische Ansicht des rechtsseitigen Ausweichgelenks 10 zwischen dem Endabschnitt 11 und dem benachbarten innen angrenzenden Gestängeabschnitt 6 nach einem weiteren erfindungsgemäßen Ausführungsbeispiel. Das Ausweichgelenk 10 ist hierbei in der Arbeitsstellung des Verteilergestänges 2 gezeigt und verbindet den Gestängeabschnitt 6 mit dem Endabschnitt 11. Sowohl der Endabschnitt 11 als auch der Gestängeabschnitt 6 weisen einen Obergurt 21 und einen Untergurt 22 auf. Der jeweilige Obergurt 21 ist mit dem Untergurt 22 durch eine Verbindungssäule 20 verbunden.

Das Ausweichgelenk 10 umfasst zwei übereinanderliegende Gelenkelemente 12, 13. Dabei ist das obere und untere Gelenkelement 12, 13 bewegbar beziehungsweise versetzbar, insbesondere kippbar, ausgebildet. Am Obergurt 21 des Endabschnitts 11 ist ein Hydraulikzylinder 14 angeordnet. Der Hydraulikzylinder 14 ist beispielhaft als einfachwirkender Hydraulikzylinder ausgebildet und erzeugt eine Vorspannkraft zwischen dem Endabschnitt 11 und dem Gestängeabschnitt 6. Mittels des Hydraulikzylinders 14 wird der Endabschnitt 11 gegenüber dem Gestängeabschnitt 6 ausweichbar gehalten. Im Speziellen wird durch die Datenverarbeitungseinheit 5 ein Stellsignal für den Hydraulikzylinder 14 generiert, sodass das Ausweichgelenk 10 auf einer minimalen Vorspannkraft gehalten wird.

Beispielhaft sind zwei Sensoren 3 am Ausweichgelenk 10 und am Hydraulikzylinder 14 positioniert. Dabei können die Sensoren 3 direkt oder indirekt eine Bewegung des Hydraulikzylinders 14 erfassen. Eine Bewegung des Hydraulikzylinders 14 ist hierzu mit einer Relativbewegung zwischen dem Gestängeabschnitt 6 und dem Endabschnitt 11 gleichzusetzen. Die Sensoren 3 können beispielhaft als Wegmesssystem oder Potentiometer oder Kontaktschalter ausgebildet sein.

Die Figuren 6 und 7 zeigen jeweils eine Frontalansicht und eine perspektivische Ansicht des rechtsseitigen Ausweichgelenks 10 zwischen dem Endabschnitt 11 und dem benachbarten innen angrenzenden Gestängeabschnitt 6 in einer nach oben gerichteten Ausweichposition. Der Aufbau des Ausweichgelenks und der angrenzenden Gestängeabschnitte ist analog zu den Figuren 4 und 5.

Beispielhaft ist der Fall gezeigt, dass der Endabschnitt 11 in Bodenberührung kommt, und deshalb zum Ausweichen nach oben gedrückt wird. Hierzu wird der Endabschnitt angehoben und schwenkt um eine Gelenkachse des Ausweichgelenks nach oben. Dabei bewegen sich die Gelenkelemente 12, 13 ebenfalls nach oben. Vorteilhafterweise kann mittels des Hydraulikzylinders 14 die Vorspannkraft des Ausweichgelenks 10 derart angepasst werden, damit das Ausweichgelenk 10 und damit auch der Endabschnitt 11 schnellstmöglich wieder in die Arbeitsstellung gemäß den Fig. 4 und 5 zurückgeführt wird.

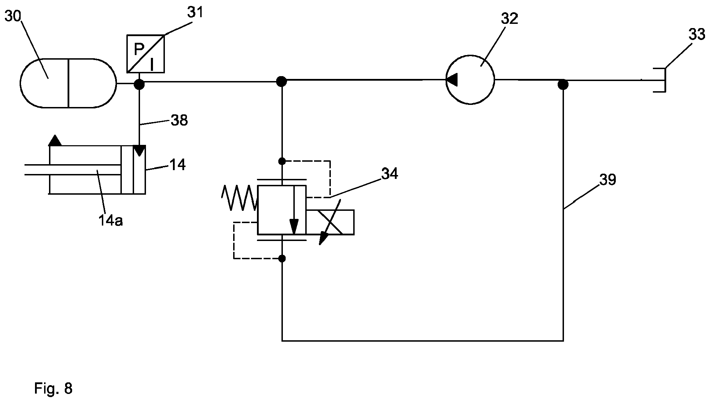

Die Figuren 8-10 stellen schematische Prinzipdarstellungen für ein erfindungsgemäßes Hydrauliksystem zur Einstellung der Vorspannkraft des Ausweichgelenks 10 auf einen Minimalwert dar. Beispielhaft werden verschieden Hydraulik- Schaltpläne gezeigt. Es wird darauf hingewiesen, dass weitere Komponenten des Hydrauliksystems vorhanden sein können, aber für die einfache schematische Anordnung in den Figuren nicht dargestellt sind.

Fig. 8 stellt einen Hydraulikschaltplan nach einem erfindungsgemäßen Ausführungsbeispiel für die Druckbeaufschlagung des Stellorgans zur Veränderung der Vorspannkraft des Ausweichgelenks 10 dar. Das Stellorgan ist beispielhaft als einfachwirkender Hydraulikzylinder 14 ausgebildet. Der Hydraulikzylinder 14 ist mit dem Ausweichgelenk 10 des Verteilergestänges 2 auf nicht dargestellte Art verbunden. Über die Hydraulikleitung 38 ist der Hydraulikzylinder 14 mit einem Hydraulikspeicher 30 verbunden. Der Hydraulikspeicher 30 enthält ein hydraulisches Fluid. Es kann ein Druckmessumformer 31 zwischen den Hydraulikspeicher 30 und den Hydraulikzylinder 14 angeschlossen sein. Der Druckmessumformer 31 stellt einen elektrischen Messumformer zur Messung des vorhandenen Drucks im Hydraulikzylinder 14 dar. Beispielsweise kann anhand einer plötzlich auftretenden Druckspitze im Hydraulikzylinder durch den Druckmessumformer 31 auf die Kollision mit einem Hindernis geschlossen werden. Daraufhin kann die Vorspannkraft des Ausweichgelenks 10 vorteilhafterweise unmittelbar reduziert werden.

Der Hydraulikzylinder 14 ist weiterhin über ein Druckbegrenzungsventil 34 und eine Überstromleitung 39 mit einer Pumpe 32 verbunden. Die Pumpe 32 ist an einem Tank 33 zur Fluid-Versorgung, insbesondere zur Öl-Versorgung, angeschlossen. Zur Pumpenabsicherung können weitere hier nicht dargestellte Druckbegrenzungsventile eingebaut werden. Die Pumpe bzw. die Ölversorgung kann an der Feldspritze angeordnet oder durch das Zugfahrzeug der Feldspritze bereitgestellt werden. Das Druckbegrenzungsventil 34 ist elektronisch steuerbar und proportional verstellbar.

Sollte der Endabschnitt 11 des Verteilergestänges mit einem Hindernis kollidieren, weicht das Ausweichgelenk 10 und damit auch der Endabschnitt 11 dem Hindernis aus. Durch das Ausweichen wird eine Kolbenstange 14a des Hydraulikzylinders 14 verschoben und verdrängt dabei das hydraulische Fluid in den Hydraulikspeicher 30 und/oder über das Druckbegrenzungsventil 34 in die Überstromleitung 39. Nach der Kollision wird das unter Druck stehende hydraulische Fluid beispielhaft mittels des Druckbegrenzungsventils 34 in den Hydraulikzylinder 14 zurückgedrückt. Dabei wird die Kolbenstange 14a des Hydraulikzylinders verschoben, sodass das Ausweichgelenk 10 in die Arbeitsstellung zurückgeführt wird.

Das elektronisch steuerbare Druckbegrenzungsventil 34 kann vorteilhafterweise über eine Datenverarbeitungseinheit 5 angesteuert werden. Dazu ist das Druckbegrenzungsventil 34 über eine nicht dargestellte Steuerleitung mit der Datenverarbeitungseinheit 5 verbunden. Basierend auf den Messsignalen des Druckmessumformers 31 oder von weiteren am landwirtschaftlichen Nutzfahrzeug und/oder Verteilergestänge angeordneten Sensoren kann die Datenverarbeitungseinheit 5 ein variables Steuersignal generieren. Das bedeutet, dass über die Datenverarbeitungseinheit 5 der minimal notwendige Druck am Hydraulikzylinder 14 eingestellt werden kann. Mittels des Signals wird das Druckbegrenzungsventil 34 derart angesteuert, beziehungsweise der Druckwert am Ventil derart angepasst, dass ein Minimalwert für die Vorspannkraft des Ausweichgelenks 10 eingestellt wird. Hierzu kann über das Druckbegrenzungsventil 34 hydraulisches Fluid über die Überstromleitung 39 in den Hydraulikzylinder 14 fließen und die Kolbenstange 14a verschieben. Weiterhin kann über das Druckbegrenzungsventil 34 der maximal zulässige Druck eingestellt werden, um das Hydrauliksystem gegen zu hohen Druck abzusichern. Übersteigt der Druck im Hydrauliksystem einen Grenzwert, bewirkt das Druckbegrenzungsventil 34 einen Abfluss des hydraulischen Fluids zum Tank 33.

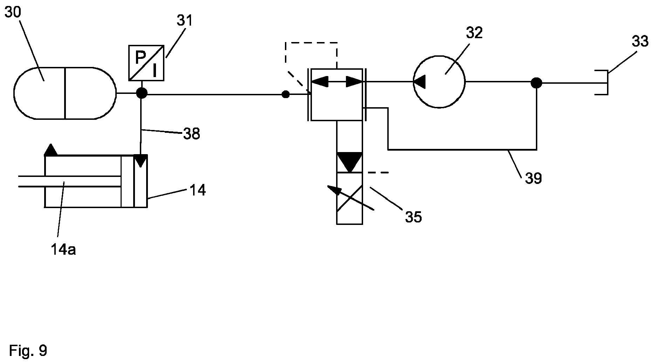

Fig. 9 stellt ein weiteres Ausführungsbeispiel eines Hydraulikschaltplans gemäß Fig. 8 dar. Anstelle des Druckbegrenzungsventils 34 gemäß Fig. 8 ist ein Druckregelventil 35 in der Überstromleitung 39 angeordnet. Das Druckregelventil 35 ist elektronisch steuerbar und proportional verstellbar. Basierend auf den Messsignalen des Druckmessumformers 31 oder von weiteren am landwirtschaftlichen Nutzfahrzeug und/oder Verteilergestänge angeordneten Sensoren kann die Datenverarbeitungseinheit 5 ein Steuersignal für das Druckregelventil 35 generieren, damit das Ventil in eine derartige Einstellung gebracht wird, dass hydraulisches Fluid zur Druckeinstellung des Hydraulikzylinders 14 aus der Überstromleitung 39 überströmen kann.

Die weitere Funktionsweise des Hydrauliksystems ist analog zu Fig. 8. Das Druckregelventil hat hierbei gegenüber dem in Fig. 8 verwendeten Druckbegrenzungsventil den Vorteil, dass nicht ein kontinuierlicher Fluidstrom aufrecht erhalten werden muss, sondern nur so viel Fluid gefördert wird, bis der gewünschte Druck eingestellt ist.

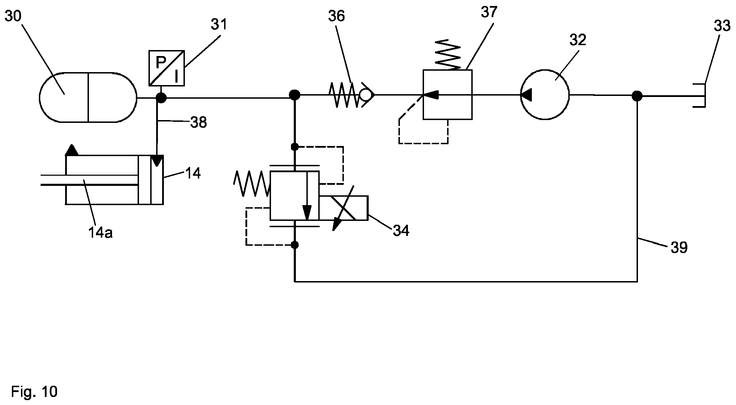

Fig. 10 zeigt ein weiteres Ausführungsbeispiel eines Hydraulikschaltplans gemäß Fig. 8. Im Vergleich zu Fig. 8 sind in der Überstromleitung 39 ein zusätzliches Rückschlagventil 36 und ein Druckreduzierventil 37 angeordnet. Dabei befinden sich das Rückschlagventil 36 und das Druckreduzierventil 37 zwischen dem Hydraulikzylinder 14 und der Pumpe 32 zur fluid-Versorgung. Beispielhaft kann mittels des Druckreduzierventils 37 ein minimaler Druck am Hydraulikzylinder 14 eingestellt werden. Sollte der minimale Druck unterschritten werden, strömt Fluid von der Pumpe in die Hydraulikleitung 38 und damit in den Hydraulikzylinder 14 zum Druckausgleich nach. Mittels des Druckbegrenzungsventils 34 kann ein maximaler Druck am Hydraulikzylinder 14 eingestellt werden. Bereits bei kleinen Bewegungen des Hydraulikzylinders 14 kann das Fluid in den Hydraulikspeicher 30 oder die Überstromleitung 39 gedrückt werden. Der in Fig. 10 gezeigte Hydraulikspeicher 30 erfüllt hierbei ebenfalls den Zweck eines Federelementes, so dass bei kleineren Druckschwankungen diese über den Hydraulikspeicher aufgefangen werden können und nur bei großen Druckänderungen das Druckbegrenzungsventil 34 öffnet. Die Größe des Hydraulikspeichers 30 kann insbesondere entsprechend der gewünschten Federwirkung gewählt werden.

Die vorliegende Erfindung und Ausführungsbeispiele beziehen sich vorrangig auf ein hydraulisches System, können jedoch mit gleicher Wirkung auch auf ein pneumatisches System übertragen werden.

### Bezuqszeichenliste

- 1: landwirtschaftliches Nutzfahrzeug
- 1a: Antriebsfahrzeug
- 1b: Anhänger
- 2: Verteilergestänge
- 3: Sensor
- 4: Sprühdüse
- 5: Datenverarbeitungseinheit
- 6: Gestängeabschnitt
- 10: Ausweichgelenk
- 11: Endabschnitt
- 12: unteres Gelenkelement
- 13: oberes Gelenkelement
- 14: Hydraulikzylinder
- 14a: Kolbenstange
- 20: Verbindungssäule
- 21: Obergurt
- 22: Untergurt
- 30: Hydraulikspeicher
- 31: Druckmessumformer
- 32: Pumpe
- 33: Tank
- 34: Druckbegrenzungsventil
- 35: Druckregelventil
- 36: Rückschlagventil
- 37: Druckreduzierventil
- 38: Hydraulikleitung
- 39: Überstromleitung

## Patentansprüche

1. Steuersystem umfassend ein Verteilergestänge (2) für ein landwirtschaftliches Nutzfahrzeug (1) zum Ausbringen von Material, wie Düngemittel, Pflanzenschutzmittel oder Saatgut, wenigstens ein Mittel zur direkten oder indirekten Erfassung von verschiedenen Betriebszuständen und/oder Umwelteinflüssen, eine Datenverarbeitungseinheit (5) zur Verarbeitung der Signale des wenigstens einen Mittels und zur Generierung eines Stellsignals für ein Stellorgan, wobei das Verteilergestänge (2) mehrere zueinander in Transportstellung einklappbare und in Arbeitsstellung ausklappbare, durch Schwenkgelenke verbundene Gestängeabschnitte (6) und an jeweils einem Endabschnitt (11) des Verteilergestänges (2) ein Ausweichgelenk (10) aufweist, **dadurch gekennzeichnet, dass** die Vorspannkraft des Ausweichgelenks (10) mittels des Stellorgans je nach Betriebszustand und/oder Umwelteinfluss veränderbar auf einen Minimalwert einstellbar ist, bei dem das Ausweichgelenk (10) in seiner Arbeitsstellung gehalten ist.

2. Steuersystem nach Anspruch 1, **dadurch gekennzeichnet, dass** das wenigstens eine Mittel derart ausgebildet ist, dass sowohl Hindernisse, insbesondere die Position von Hindernissen, als auch die Bewegung des Verteilergestänges, insbesondere auftretende Beschleunigungen, erfassbar sind.

3. Steuersystem nach einem der vorhergehenden Ansprüche, **dadurch gekennzeichnet, dass** die Vorspannkraft des jeweiligen Ausweichgelenks (10) in Abhängigkeit von auftretenden Beschleunigungen des Verteilergestänges (2) und/oder des landwirtschaftlichen Nutzfahrzeuges (1) und/oder Erschütterungen aufgrund von Bodenunebenheiten und/oder Kurvenfahrten des landwirtschaftlichen Nutzfahrzeuges (1) und/oder auftretenden Schwingungen oder Gierbewegungen des Verteilergestänges (2) und/oder auftretenden Relativbewegungen des Ausweichgelenks (10) zum starren Teil des Verteilergestänges (2) und/oder einer Kollision mit einem Hindernis und/oder der aktuellen Fahrgeschwindigkeit und/oder der Aktivierung der Sprühdüsen veränderbar auf einen unterschiedlichen Minimalwert einstellbar ist.

4. Steuersystem nach einem der vorhergehenden Ansprüche, **dadurch gekennzeichnet, dass** das wenigstens eine Mittel durch einen Drehratensensor oder einen Beschleunigungssensor oder einen Dehnungsmesstreifen zur Ermittlung einer Belastungsänderung des Ausweichgelenks (10) gebildet ist.

5. Steuersystem nach einem der vorhergehenden Ansprüche, **dadurch gekennzeichnet, dass** das wenigstens eine Mittel durch einen GPS-Sensor oder einen akustischen oder optischen Sensor zur Ermittlung der Position von Hindernissen gebildet ist.

6. Steuersystem nach einem der vorhergehenden Ansprüche, **dadurch gekennzeichnet, dass** das wenigstens eine Mittel derart ausgebildet ist, dass Prozessinformationen des Fahrzeugzustands, insbesondere der Betriebszustand der Sprühdüsen (4) des Verteilergestänges (2), erfassbar sind.

7. Steuersystem nach einem der vorhergehenden Ansprüche, **dadurch gekennzeichnet, dass** mehrere Mittel an verschiedenen Positionen am Verteilergestänge (2), insbesondere im angrenzenden Bereich an das jeweilige Ausweichgelenk (10), und/oder am landwirtschaftlichen Nutzfahrzeug (1) positioniert sind.

8. Steuersystem nach einem der vorhergehenden Ansprüche, **dadurch gekennzeichnet, dass** das Stellorgan ein Hydrauliksystem zur Veränderung der Vorspannkraft des Ausweichgelenks (10) aufweist.

9. Steuersystem nach Anspruch 8, **dadurch gekennzeichnet, dass** das Hydrauliksystem einen Hydraulikzylinder (14), insbesondere einen einfachwirkenden Hydraulikzylinder (14), eine Hydraulikleitung (38), welche zur Zufuhr von Hydraulikflüssigkeit an den Hydraulikzylinder (14) angeschlossen ist, und eine hydraulische Ventileinheit, insbesondere ein Druckregelventil (35), zur Regelung des Hydraulikdrucks umfasst, wobei die Ventileinheit über ein Stellsignal der Datenverarbeitungseinheit (5) steuerbar ist.

10. Steuersystem nach Anspruch 9, **dadurch gekennzeichnet, dass** die an dem jeweiligen Hydraulikzylinder (14) angeschlossene Hydraulikleitung (38) mit zumindest einem Hydraulikspeicher (30) in Verbindung steht.

11. Steuersystem nach einem der Ansprüche 9 bis 10, **dadurch gekennzeichnet, dass** das wenigstens eine Mittel durch einen Drucksensor, insbesondere einen Druckmessumformer, gebildet ist, welcher in der Hydraulikleitung (38) angebracht ist.

12. Steuersystem nach einem der vorhergehenden Ansprüche, **dadurch gekennzeichnet, dass** die Datenverarbeitungseinheit (5) eine Betätigungsvorrichtung zur manuellen Generierung eines Stellsignals für das Stellorgan aufweist.

13. Landwirtschaftliches Nutzfahrzeug (1) zum Ausbringen von Material, wie Düngemittel, Pflanzenschutzmittel oder Saatgut mit einem Steuersystem nach einem der vorhergehenden Ansprüche.

14. Verfahren zur Steuerung eines landwirtschaftlichen Nutzfahrzeuges (1), wobei das landwirtschaftliche Nutzfahrzeug (1) ein Verteilergestänge (2) zum Ausbringen von Material, wie Düngemittel, Pflanzenschutzmittel oder Saatgut, wenigstens ein Mittel zur direkten oder indirekten Erfassung von verschiedenen Betriebszuständen und/oder Umwelteinflüssen und eine Datenverarbeitungseinheit (5) zur Verarbeitung der Signale des wenigstens einen Mittels und zur Generierung eines Stellsignals für ein Stellorgan umfasst, wobei das Verteilergestänge (2) mehrere zueinander in Transportstellung einklappbare und in Arbeitsstellung ausklappbare, durch Schwenkgelenke verbundene Gestängeabschnitte (6), und an jeweils einem Endabschnitt (11) des Verteilergestänges ein Ausweichgelenk (10) aufweist, wobei das Verfahren folgende Schritte umfasst:
a) das wenigstens eine Mittel erfasst den Betriebszustand und/oder Umwelteinfluss des Verteilergestänges (2) und/oder landwirtschaftlichen Nutzfahrzeuges (1);
b) die Signale des wenigstens einen Mittels werden von der Datenverarbeitungseinheit (5) verarbeitet;
c) die Datenverarbeitungseinheit (5) generiert ein Stellsignal basierend auf den Signalen des Mittels;
d) mit Hilfe des Stellsignals wird das dem jeweiligen Ausweichgelenk (10) zugeordnete Stellorgan angesteuert, sodass die Vorspannkraft des jeweiligen Ausweichgelenks (10) auf einen Minimalwert eingestellt wird, bei dem das Ausweichgelenk (10) in seiner Arbeitsstellung gehalten wird.

15. Verfahren nach Anspruch 14, **dadurch gekennzeichnet, dass** die Vorspannkraft des jeweiligen Ausweichgelenks (10) in Abhängigkeit von auftretenden Beschleunigungen des Verteilergestänges (2) und/oder des landwirtschaftlichen Nutzfahrzeuges (1) und/oder Erschütterungen aufgrund von Bodenunebenheiten und/oder Kurvenfahrten des landwirtschaftlichen Nutzfahrzeuges (1) und/oder auftretenden Schwingungen oder Gierbewegungen des Verteilergestänges (2) und/oder auftretenden Relativbewegungen des Ausweichgelenks (10) zum starren Teil des Verteilergestänges (2) und/oder einer Kollision mit einem Hindernis und/oder der aktuellen Fahrgeschwindigkeit und/oder der Aktivierung der Sprühdüsen (4) auf einen unterschiedlichen Minimalwert eingestellt wird.

16. Verfahren nach Anspruch 14 oder 15, **dadurch gekennzeichnet, dass** die Vorspannkraft des Ausweichgelenks (10) des Verteilergestänges (2) im Bedarfsfall manuell mittels einer Betätigungsvorrichtung der Datenverarbeitungseinheit (5) über das Stellorgan verändert wird.
